# EUROPEAN PATENT SPECIFICATION

(11) **EP 3 105 476 B1**
(45) Date of publication and mention of the grant of the patent: **19.09.2018**
(21) Application number: 15704695.4
(22) Date of filing: 10.02.2015
(51) Int. Cl.: F02F 11/00, F16J 15/08

(54) **CYLINDER HEAD GASKET FOR HIGH LOAD AND MOTION APPLICATIONS**
ZYLINDERKOPFDICHTUNG FÜR ANWENDUNGEN MIT HOHEN LASTEN UND BEWEGUNGEN
JOINT DE CULASSE POUR APPLICATIONS À CHARGE ET MOUVEMENT IMPORTANTS

(30) Priority: 13.02.2014 US 201414179961
(43) Date of publication of application: 21.12.2016
(73) Proprietor: Federal-Mogul LLC, Southfield, MI 48034 (US)
(72) Inventor: HABERER, Tyler, Southfield, MI 48034 (US); OKANO, Takashi, Commerce Township, MI 48390 (US); VIALARD, Daniel J., Canton, MI 48187 (US)
(74) Representative: Becker Kurig Straus
(86) International application number: PCT/US2015/015198
(87) International publication number: WO 2015/123197

(56) References cited:
- DE-A1- 10 060 872
- JP-A- 2010 090 945
- US-A1- 2003 127 805

## Description

### BACKGROUND OF THE INVENTION

### 1. Field of the Invention

This invention relates generally to gaskets for providing a seal between two parts, and more particularly to multi-layer gaskets, such as cylinder head gaskets.

### 2. Description of the Prior Art

Gaskets are typically used to establish a gas and fluid tight seal between two parts clamped together, such as a cylinder head and an engine block of an internal combustion engine. Such gaskets oftentimes include a functional layer having a sealing bead, also referred to as an embossment, to facilitate the tight seal (see for example document JP 2010 090945 A). The functional layer with the sealing bead is typically provided along with one or more additional layers, and the multiple layers are compressed together between the two clamped parts, in order to establish the gas and fluid tight seal. However, if the gasket is over-compressed, damage can occur to the sealing bead. For example, if the bead becomes substantially flattened, it loses its ability to exert a high compression sealing pressure, and fatigue cracks can form in the area of the bead.

### SUMMARY OF THE INVENTION

One aspect of the invention provides a gasket, such as a cylinder head gasket for an internal combustion engine. The gasket includes a first functional layer including a first outer surface and an oppositely facing first inner surface. The first functional layer extends between a first edge surrounding a combustion chamber opening and a second edge. A portion of the first outer surface and the first inner surface extend in a first direction to present a first full bead around the combustion chamber opening. The gasket also includes a second functional layer including a second inner surface facing the first inner surface and an oppositely facing second outer surface. The second functional layer extends between a third edge surrounding the combustion chamber opening and a fourth edge. A portion of the second inner surface and the second outer surface of the second functional layer extend in a second direction opposite the first direction to present a second full bead axially aligned with the first full bead. A first stopper extends along the first inner surface of the first functional layer between the first edge and the first full bead. A second stopper extends along the second outer surface of the second functional layer. The second stopper is attached to the second outer surface around the second full bead and is spaced from the second outer surface at the second full bead.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a radial cross-sectional side view of a cylinder head gasket according to a first exemplary embodiment of the invention;
Figure 2 is a radial cross-sectional side view of a cylinder head gasket according to a second exemplary embodiment of the invention; and
Figure 3 is a top view of the exemplary cylinder head gasket of Figure 1, wherein the cross-section shown in Figure 1 is taken along line 1-1 of Figure 3,

### DESCRIPTION OF THE ENABLING EMBODIMENT

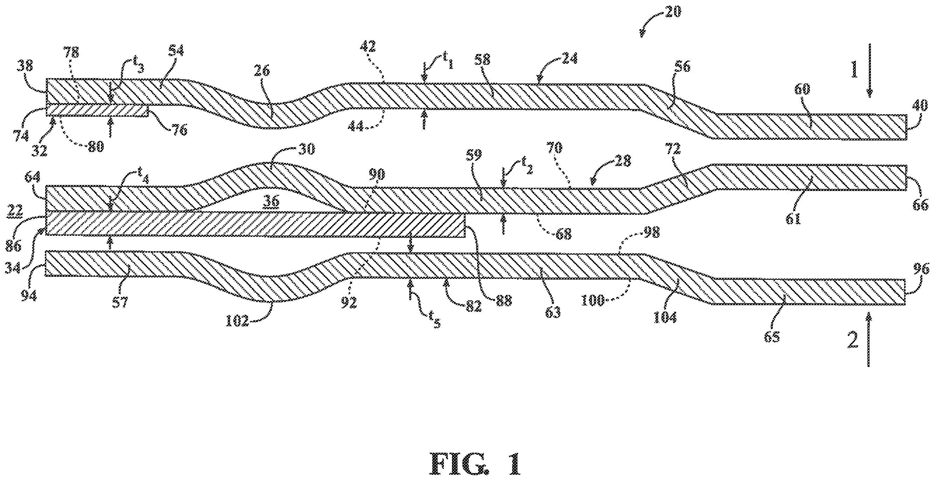

Referring to the Figures, wherein like numerals indicate corresponding parts throughout the several views, a multi-layer static gasket **20, 20'** providing improved performance under high loads and high motion is generally shown in Figures 1-3. The gasket **20, 20'** is typically used to establish a gas and/or fluid-tight seal between two components clamped together, for example between a cylinder head and engine block and around a combustion chamber opening **22, 22'**. The gasket **20, 20'** includes a first functional layer **24, 24'** with a first full bead **26, 26'** and a second functional layer **28,28'** with a second full bead **30, 30'** axially aligned with and facing toward the first full bead **26, 26'.** A first stopper **32, 32'** is attached to the first functional layer **24, 24'** adjacent the combustion chamber opening **22, 22'** for preventing over-compression of the first full bead **26, 26'**. A second stopper **34, 34'** is attached to the second functional layer **28, 28'** around the second full bead **30, 30'** for increasing load on the second full bead **30, 30'**, promoting an even distribution of the load, and reducing head lift. The second stopper **34,34'** is not attached to the second functional layer **28, 28'** adjacent the second full bead **30, 30'**, and thus an air gap **36, 36'** is present between the second stopper **34, 34'** and the second full bead **30, 30'** when the gasket **20, 20'** is not compressed.

Figure 1 is a cross-sectional view of the gasket **20** according to a first exemplary embodiment. The gasket **20** includes the first functional layer **24** extending continuously between a first edge **38** and a second edge **40**. The first functional layer **24** also presents a first outer surface **42** and an oppositely facing first inner surface **44** each extending from the first edge **38** to the second edge **40**. The first outer surface **42** and the first inner surface **44** present a thickness **t₁** therebetween, which is typically constant from the first edge **38** to the second edge **40**.

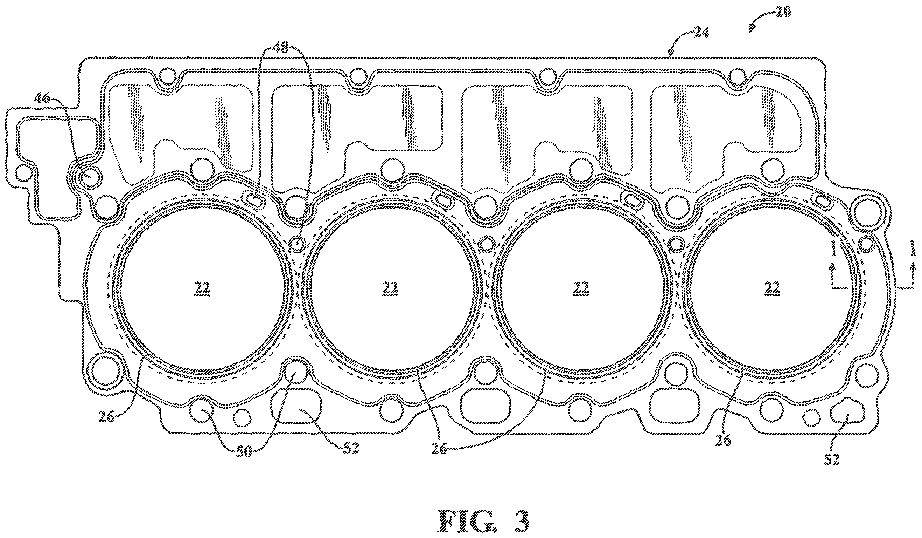

The first edge **38** of the first functional presents the combustion chamber opening **22**. The combustion chamber opening **22** typically has a cylindrical shape, but could comprise other shapes. In the first exemplary embodiment, the first full bead **26** of the first functional layer **24** extends circumferentially and continuously around the first edge **38** presenting the combustion chamber opening **22**. Typically, the gasket **20** includes multiple combustion chamber openings **22**, each surrounded by one of the first full beads **26**. Figure 3 is a top view of the gasket **20** of Figure 1 showing four combustion chamber openings **22** each having a cylindrical shape. However, the gasket **20** could include any number of combustion chamber openings **22**, depending on the engine for which the gasket **20** is designed, and those openings could comprise another shape.

The second edge **40** of the first functional layer **24** typically presents an outer periphery of the gasket **20**, or a secondary opening for allowing fluid or bolts to pass through. The exemplary gasket **20** of Figure 3 includes several secondary openings, in addition to the combustion chamber opening **22**, specifically oil feed holes **46**, coolant metering holes **48**, bolt holes **50**, and oil drain back holes **52**.

In the first exemplary embodiment, the first full bead **26** of the first functional layer **24** is disposed between the first edge **38** and the second edge **40**, but closer to the first edge **38** than the second edge **46**, as shown in Figure 1. The first inner surface **44** and the first outer surface **42** of the first functional layer **24** extend inwardly in a first direction **1** to present the first full bead **26**. The first inner surface **44** is convex along the first full bead **26**, and the first outer surface **42** is concave along the first full bead **26**. The first inner surface **44** and the first outer surface **42** of the first functional layer **24** include a first planar region **54** between the first edge **38** and the first full bead **26**.

The first functional layer **24** of the first exemplary embodiment also includes a first half bead **56** disposed between the first full bead **26** and the second edge **40**, as shown in Figure 1. The first half bead **56** typically extends along the second edge **40**, as shown in Figure 3. The first inner surface **44** and the first outer surface **42** of the first functional layer **24** include a second planar region **58** between the first full bead **26** and the first half bead **56**, and a third planar region **60** between the first half bead **56** and the second edge **40**. A portion of the first inner surface **44** and the first outer surface **42** of the first functional layer **24** is disposed at an angle relative to the planar regions **54, 58, 60** and extends in the first direction **1** to present the first half bead **56**.

The second functional layer **28** of the gasket **20** extends continuously between a third edge **64** aligned with the first edge **38** of the functional layer and a fourth edge **66** aligned with the second edge **40** of the first functional layer **24**. The second functional layer **28** also presents a second outer surface **68** and an oppositely facing second inner surface **70** each extending from the third edge **64** to the fourth edge **66**. The second outer surface **68** and the second inner surface **70** present a thickness **t₂** therebetween. The thickness **t₂** is typically constant from the third edge **64** to the fourth edge **66**, and is typically equal to the thickness **t₁** of the first functional layer **24**.

The second functional layer **28** presents the second full bead **30** disposed between the third edge **64** and the fourth edge **66**, but closer to the third edge **64** than the fourth edge **66**, as shown in Figure 1, A portion of the second inner surface **70** and the second outer surface **68** of the second functional layer **28** extend inwardly in a second direction **2**, which is opposite the first direction **1** and toward the first functional layer **24**, to present the second full bead **30**. The second full bead **30** is axially aligned with the first full bead **26** of the first functional layer **24**. In the first exemplary embodiment, the first full bead **26** and the second full bead **30** have contours which are mirror images of one another, as shown in Figure 1. The second inner surface **70** of the second functional layer **28** is convex along the second full bead **30** and the second outer surface **68** of the second functional layer **28** is concave along the second full bead **30**. The second inner surface **70** and the second outer surface **68** of the second functional layer **28** include a first planar region **55** between the third edge **64** and the second full bead **30**. The second full bead **30** of the second functional layer **28** also extends circumferentially and continuously around the third edge **64** presenting the combustion chamber opening **22**, just like the first full bead **26**.

In the first exemplary embodiment, the second functional layer **28** includes a second half bead **72** disposed between the second full bead **30** and the fourth edge **66**. The second half bead **72** is axially aligned with the first half bead **56**, and the first half bead **56** and the second half bead **72** have contours which are mirror images of one another. The second half bead **72** typically extends along the fourth edge **66**. The second inner surface **70** and the second outer surface **68** of the second functional layer **28** include a second planar region **59** between the second full bead **30** and the second half bead **72**, and a third planar region **61** between the second half bead **72** and the fourth edge **66**. A portion of the second inner surface **70** and the second outer surface **68** of the second functional layer **28** are disposed at an angle relative to the planar regions **55, 59, 61** and extend in the second direction **2** to present the second half bead **72**, just like the second full bead **30**.

The first stopper **32** of the gasket **20** extends along the first inner surface **44** of the first functional layer **24**. The first stopper **32** also extends circumferentially around the first edge **38**, between the first edge **38** and the first full bead **26**, for preventing over-compression of the first full bead **26**. The first stopper **32** includes a first stopper end **74** located at the first edge **38** and extends to a second stopper end **76** located between the first edge **38** and the first full bead **26**. The first stopper **32** also presents a first stopper surface **78** extending along the first planar region **54** of the first functional layer **24** and a second stopper surface **80** facing opposite the first stopper surface **78** and toward the second functional layer **28**. The first stopper surface **78** and the second stopper surface **80** are typically planar from the first stopper end **74** to the second stopper end **76**. The first stopper surface **78** and the second stopper surface **80** also present a thickness **t₃** therebetween. In the first exemplary embodiment, the thickness **t₃** of the first stopper **32** is less than the thicknesses **t₂, t₃** of the functional layers **24, 28.** The first stopper surface **78** is attached to the first inner surface **44** of the first functional layer **24,** and it is also attached continuously from the first stopper end **74** to the second stopper end **76.** In the first exemplary embodiment, the first stopper surface **78** is welded, mechanically fixed, or clinched to the first inner surface **44** of the first functional layer **24**, after the first full bead **26** is formed in the first functional layer **24**. However, the first stopper **32** could be attached to the first functional layer **24** by other methods.

The second stopper **34** of the gasket **20** extends along the second outer surface **68** between the third edge **64** and the fourth edge **66** of the second functional layer **28**. As shown in Figure 1, the second stopper **34** extends along and beneath the second full bead **30** for increasing load on the second full bead **30** and promoting even distribution of the load. The second stopper **34** includes a third stopper end **86** aligned with the third edge **64** and extends to a fourth stopper end **88** located between the third edge **64** and the fourth edge **66**, but closer to the third edge **64** than the fourth edge **66**. The second stopper **34** presents a third stopper surface **90** extending along the second outer surface **68** of the second functional layer **28** and a fourth stopper surface **92** facing opposite the first stopper surface **78**. The third stopper surface **90** and the fourth stopper surface **92** are planar from the third stopper end **86** to the fourth stopper end **88**. The third stopper surface **90** and the fourth stopper surface **92** also present a thickness **t₄** therebetween. In the first exemplary embodiment, the thickness **t₄** of the second stopper **34** is not less than the thickness **t₃** of the first stopper **32** and less than the thicknesses **t₁, t₂** of the functional layers **24, 28**. However, the thickness **t₄** of the second stopper **34** could vary, for example it could be greater than, equal to, or less than the thickness **t₃** of the first stopper **32**.

As shown in Figure 1, the third stopper surface **90** of the second stopper **34** is attached to the second outer surface **68** of the second functional layer **28** along the first planar region **55** and along the second planar region **59** of the second functional layer **28.** However, third stopper surface **90** is spaced from the second outer surface **68** of the second functional layer **28** along the second full bead **30.** When the gasket **20** is not compressed, i.e. when no pressure is applied to the functional layers **24, 28** of the gasket **20,** the third stopper surface **90** is spaced from the second outer surface **68** by the air gap **36.** The third stopper surface **90** is typically welded, mechanically fixed, or clinched to the second outer surface **68** along the first planar region **55** and along the second planar region **59** of the second functional layer **28.** However, the third stopper surface **90** is not attached to the second outer surface **68** along and adjacent the second full bead **30** of the second functional layer **28**, as shown in Figure 1.

Although not required, the gasket **20** of the first exemplary embodiment also includes a third functional layer **82** disposed adjacent the fourth stopper surface **92** and the second outer surface **68** of the second functional layer **28**. As shown in Figure 1, third functional layer **82** and the first functional layer **24** have matching contours. The third functional layer **82** extends continuously between a fifth edge **94** aligned with the first edge **38** and a sixth edge **96** aligned with the second edge **40**. The third functional layer **82** presents an third inner surface **98** facing the fourth stopper surface **92** of the second stopper **34** and the second outer surface **68** of the second functional layer **28** and an oppositely facing third outer surface **100** each extending from the fifth edge **94** to the sixth edge **96**. The third outer surface **100** and the third inner surface **98** present a thickness **t₅** therebetween, which is constant from the fifth edge **94** to the sixth edge **96**. The thickness **t₅** of the third functional layer **82** is typically equal to the thickness **t₁** of the first functional layer **24** and the thickness **t₂** of the second functional layer **28**.

The third functional layer **82** also presents a third full bead **102** axially aligned with the first full bead **26** and the second full bead **30.** The third full bead **102** and the first full bead **26** have matching contours, as shown in Figure 1. The third full bead **102** is disposed between the fifth edge **94** and the sixth edge **96**, but closer to the fifth edge **94** than the sixth edge **96**. A portion of the third inner surface **98** and the third outer surface **100** of the third functional layer **82** extend in the first direction **1** to present the third full bead **102.** The third inner surface **98** of the third functional layer **82** is concave along the third full bead **102** and the third outer surface **100** of the third functional layer **82** is convex along the third full bead **102**. The third full bead **102** also extends circumferentially and continuously around the combustion chamber opening **22**, just like the first full bead **26** and the second full bead **30**. The third inner surface **98** and the third outer surface **100** of the third functional layer **82** include a first planar region **57** between the fifth edge **94** and the third full bead **102**.

The gasket **20** of the first exemplary embodiment also includes a third half bead **104** disposed between the third full bead **102** and the sixth edge **96**, and extending along the sixth edge **96**. The third half bead **104** is axially aligned with the first half bead **56** and the second half bead **72**, and the third half bead **104** and the first half bead **56** have matching contours. The third inner surface **98** and the third outer surface **100** of the third functional layer **82** include a second planar region **63** between the third full bead **102** and the third half bead **104**, and a third planar region **65** between the third half bead **104** and the sixth edge **96**. A portion of the third inner surface **98** and the third outer surface **100** of the third functional layer **82** are disposed at an angle relative to the planar regions **57, 63, 65** and extend in the first direction 1 to present the third half bead **104**.

Each of the functional layers **24, 28, 82** and the stoppers **32, 34** are typically formed of a steel material. Preferably, the steel material includes chromium and nickel. Exemplary steel materials include SS301 fully hardened spring stainless steel material, cold rolled stainless steel, or SS304 annealed stainless steel.

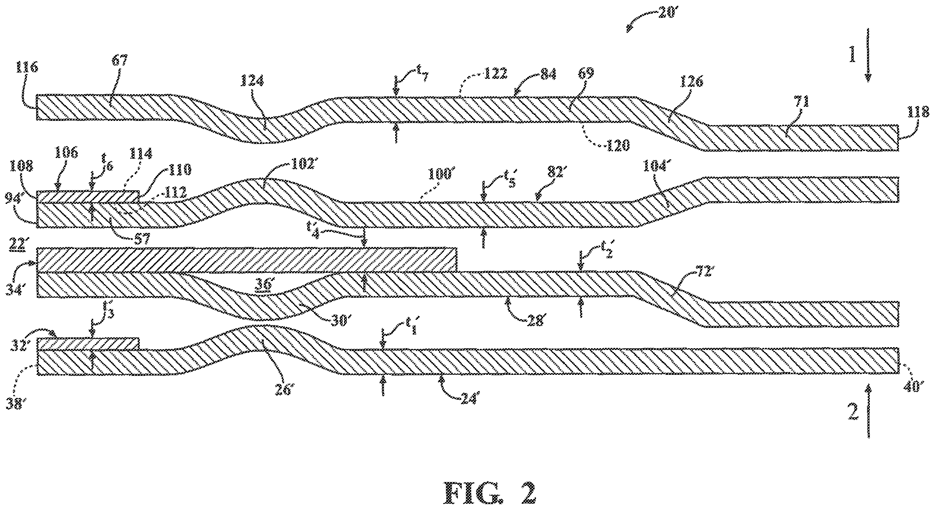

A cross-section of a second example of the gasket **20'** is shown Figure 2. This gasket **20'** also includes the first functional layer **24'**, second functional layer **28'**, and third functional layer **82'** each including the full bead **26', 30', 102'**. However, in Figure 2, the first functional layer **24'** and the second functional layer **28'** are flipped upside down, so that the first full bead **26'** and the third full bead **102'** extend in the second direction **2** and the second full bead **30'** extends in the first direction **1**. Also, according to the second example, the first functional layer **24'** does not include the first half bead **56'**, like the gasket **20** of the first exemplary embodiment. The gasket **20'** of the second example also includes the first stopper **32'** attached to the first functional layer **24'** adjacent the combustion chamber opening **22'** for preventing over-compression of the first full bead **26'**, and the second stopper **34'** attached to the second functional layer **28'** around the second full bead **30'** for increasing load on the second full bead **30'**, promoting an even distribution of the load, and reducing head lift. As shown in Figure 2, the second stopper **34'** is not attached to the second functional layer **28'** adjacent the second full bead **30'**, and thus an air gap **36'** is present between the second stopper **34'** and the second full bead **30'** when the gasket **20'** is not compressed, like the first exemplary embodiment.

Unlike the gasket **20** of the first exemplary embodiment, the gasket **20'** of the second example includes a third stopper **106** extending along the third outer surface **100'** of the third functional layer **82'** and circumferentially around the fifth edge **94'** and between the fifth edge **94'** and the third full bead **102'** for preventing over-compression of the third full bead **102'**. The third stopper **106** extends from a fifth stopper end **108** located at the fifth edge **94'** to a sixth stopper end **110** located between the fifth edge **94'** and the third full bead **102'**. The third stopper **106** also presents a fifth stopper surface **112** extending along the first planar region **57'** of the third outer surface **100'** of the third functional layer **82'** and a sixth stopper surface **114** facing opposite the fifth stopper surface **112.** The fifth stopper surface **112** is attached to the third outer surface **100'** of the third functional layer **82'** continuously from the fifth stopper end **108** to the sixth stopper end **110**. The fifth stopper surface **112** and the sixth stopper surface **114** are planar from the fifth stopper end **108** to the sixth stopper end **110**, and the fifth stopper surface **112** and the sixth stopper surface **114** present a thickness **t₆** therebetween. Typically, the third stopper **106** is of the same size and shape as the first stopper **32'**. For example, the thickness **t₆** of the third stopper **106** is typically equal to the thickness **t₃'** of the first stopper **32'** and less than the thickness **t₄'** of the second stopper **34**. However, the thickness **t₆** of the third stopper could vary. For example, the thickness **t₆** of the third stopper **106** could be equal to or greater than the thickness **t₄'** of the second stopper **34**. The fifth stopper surface **112** is welded, mechanically fixed, or clinched to the third outer surface **100'** of the third functional layer **82'**, but could be attached using other methods,

The gasket **20'** of the second example shown in Figure 2 also includes a fourth functional layer **84** disposed adjacent the sixth stopper surface **114** and the third outer surface **100'** of the third functional layer **82'**. The fourth functional layer **84** and the second functional layer **28'** have matching contours, and the fourth functional layer **84** extends continuously between a seventh edge **116** aligned with the first edge **38'** and an eighth edge **118** aligned with the second edge **40'** of the first functional layer **24'**. The fourth functional layer **84** presents a fourth inner surface **120** facing the sixth stopper surface **114** and the third outer surface **100'** of the third functional layer **82'**. The fourth functional layer **84** also includes an oppositely facing fourth outer surface **122** each extending from the seventh edge **116** to the eighth edge **118**. The fourth outer surface **122** and the fourth inner surface **120** present a thickness **t₇** therebetween, which is constant from the seventh edge **116** to the eighth edge **118**. The thickness **t₇** of the fourth functional layer **84** is typically equal to the thicknesses **t₁', t₂', t₅'** of the other three functional layers **24', 28', 82'**.

As shown in Figure 2, the fourth functional layer **84** presents a fourth full bead **124** axially aligned with the first full bead **26'**, the second full bead **30'**, and the third full bead **102'**. The fourth full bead **124** and the second full bead **30'** have matching contours. The fourth full bead **124** is disposed between the seventh edge **116** and the eighth edge **118**, but closer to the seventh edge **116** than the eighth edge **118**. A portion of the fourth inner surface **120** and the fourth outer surface **122** of the fourth functional layer **84** extends in the first direction **1** toward the third functional layer **82'** to present the fourth full bead **124**. The fourth inner surface **120** of the fourth functional layer **84** is convex along the fourth full bead **124** and the fourth outer surface **122** of the fourth functional layer **84** is concave along the fourth full bead **124**. The fourth full bead **124** extends circumferentially and continuously around the combustion chamber opening **22'**, just like the other full beads **26', 30', 102'**. The fourth inner surface **120** and the fourth outer surface **122** of the fourth functional layer **84** include a first planar region **67** between the seventh edge **116** and the fourth full bead **124**.

The fourth functional layer **84** also includes a fourth half bead **126** disposed between the fourth full bead **124** and the eighth edge **118** and axially aligned with the second half bead **72'** and the third half bead **104'**. The fourth half bead **126** and the second half bead **72'** have matching contours, and the fourth half bead **126** extends along the eighth edge **118**. The fourth inner surface **120** and the fourth outer surface **122** of the fourth functional layer **84** include a second planar region **69** between the fourth full bead **124** and the fourth half bead **126** and a third planar region **71** between the fourth half bead **126** and the eighth edge **118**. A portion of the fourth inner surface **120** and the fourth outer surface **122** of the fourth functional layer **84** are disposed at an angle relative to the planar regions **67, 69, 71** and extend in the first direction **1** to present the fourth half bead **126**. As in the first exemplary embodiment, each of the functional layers **24', 28', 82', 84** and the stoppers **32'**, **34', 106** of the second exemplary embodiment are typically formed of a steel material, preferably a steel material including chromium and nickel.

Although not shown, the gasket **20, 20'** could include additional functional layers and stoppers stacked on top of the layers shown in Figures 1 and 2. In addition, the gasket **20, 20'** could include at least one distance layer disposed between or adjacent at least one of the functional layers for providing additional support, prevent over-compression, or adjust the distribution of the load along the gasket **20,20'**.

Obviously, many modifications and variations of the present invention are possible in light of the above teachings and may be practiced within the scope of the appended claims.

## Claims

1. A cylinder head gasket, comprising:
a first functional layer (24) extending continuously between a first edge (38) presenting a combustion chamber opening (22) and a second edge (40). said combustion chamber opening having a cylindrical shape;
said first functional layer presenting a first outer surface (42) and an oppositely facing first inner surface (44) each extending from said first edge to said second edge;
said first outer surface and said first inner surface presenting a thickness (t₁) therebetween, said thickness being constant from said first edge to said second edge;
said first functional layer presenting a first full bead (26) disposed between said first edge and said second edge and closer to said first edge than said second edge;
said first inner surface and said first outer surface of said first functional layer extending inwardly in a first direction (1) to present said first full bead;
said first inner surface of said first functional layer being convex along said first full bead and said first outer surface of said first functional layer being concave along said first full bead;
said first full bead extending circumferentially and continuously around said first edge presenting said combustion chamber opening;
said first inner surface and said first outer surface of said first functional layer including a first planar region (54) between said first edge and said first full bead;
said first functional layer including a first half bead (56) disposed between said first full bead and said second edge;
said first half bead extending along said second edge;
said first inner surface and said first outer surface of said first functional layer including a second planar region (58) between said first full bead and said first half bead;
said first inner surface and said first outer surface of said first functional layer including a third planar region (60) between said first half bead and said second edge;
a portion of said first inner surface and said first outer surface of said first functional layer being disposed at an angle relative to said planar regions and extending in said first direction to present said first half bead;
a second functional layer (28) extending continuously between a third edge (64) aligned with said first edge and presenting said combustion chamber opening and a fourth edge (66) aligned with said second edge;
said second functional layer presenting a second outer surface (68) and an oppositely facing second inner surface (70) each extending from said third edge to said fourth edge;
said second outer surface and said second inner surface presenting a thickness (t₂) therebetween, said thickness being constant from said third edge to said fourth edge;
said thickness of said second functional layer being equal to said thickness of said first functional layer;
said second functional layer presenting a second full bead (30) disposed between said third edge and said fourth edge and closer to said third edge than said fourth edge;
said second inner surface and said second outer surface of said second functional layer extending inwardly in a second direction opposite said first direction and toward said first functional layer to present said second full bead;
said second full bead of said second functional layer being axially aligned with said first full bead of said first functional layer;
said first full bead and said second full bead having contours being mirror images of one another;
said second inner surface of said second functional layer being convex along said second full bead and said second outer surface of said second functional layer being concave along said second full bead;
said second full bead of said second functional layer extending circumferentially and continuously around said third edge presenting said combustion chamber opening;
said second inner surface and said second outer surface of said second functional layer including a first planar region between said third edge and said second full bead;
said second functional layer including a second half bead (72) disposed between said second full bead and said fourth edge and axially aligned with said first half bead;
said first half bead and said second half bead having contours being mirror images of one another;
said second half bead extending along said fourth edge;
said second inner surface and said second outer surface of said second functional layer including a second planar region (59) between said second full bead and said second half bead;
said second inner surface and said second outer surface of said second functional layer including a third planar region (61) between said second half bead and said fourth edge;
a portion of said second inner surface and said second outer surface of said second functional layer being disposed at an angle relative to said planar regions and extending in said second direction to present said second half bead;
a first stopper (32) extending along said first inner surface of said first functional layer circumferentially around said first edge and between said first edge and said first full bead for preventing over-compression of said first full bead;
said first stopper extending from a first stopper end (74) located at said first edge to a second stopper end (76) located between said first edge and said first full bead;
said first stopper presenting a first stopper surface (78) extending along said first planar region of said first inner surface of said first functional layer and a second stopper surface (80) facing opposite said first stopper surface and toward said second functional layer;
said first stopper surface and said second stopper surface being planar from said first stopper end to said second stopper end;
said first stopper surface being attached to said first inner surface of said first functional layer;
said first stopper surface being attached to said first inner surface continuously from said first stopper end to said second stopper end;
said first stopper surface being welded, mechanically fixed, or clinched to said first inner surface of said first functional layer;
said first stopper surface and said second stopper surface presenting a thickness (t₃) therebetween;
said thickness of said first stopper being less than said thickness of said functional layers;
a second stopper (34) extending along said second outer surface of said second functional layer and along said second full bead of said second functional layer between said third edge and said fourth edge for increasing load on said second full bead and promoting even distribution of the load;
said second stopper extending from a third stopper end (86) aligned with said third edge to a fourth stopper end (88) located between said third edge and said fourth edge and closer to said third edge than said fourth edge;
said second stopper presenting a third stopper surface (90) extending along said second outer surface of said second functional layer and a fourth stopper surface (92) facing opposite said first stopper surface;
said third stopper surface and said fourth stopper surface being planar from said third stopper end to said fourth stopper end;
said third stopper surface being attached to said second outer surface along said first planar region and along said second planar region of said second functional layer;
said third stopper surface being spaced from said second outer surface of said second functional layer along said second full bead by an air gap when said gasket is not compressed;
said third stopper surface being welded, mechanically fixed, or clinched to said second outer surface along said first planar region and along said second planar region of said second functional layer;
said third stopper surface being not attached to said second outer surface along said second full bead of said second functional layer;
said third stopper surface and said fourth stopper surface presenting a thickness (t₄) therebetween;
said thickness of said second stopper being not less than said thickness of said first stopper and less than said thickness of said functional layers.

2. The cylinder head gasket of claim 1, further comprising:
a third functional layer (82) disposed adjacent said fourth stopper surface and said second outer surface of said second functional layer;
said third functional layer and said first functional layer having matching contours;
said third functional layer extending continuously between a fifth edge (94) aligned with said first edge and a sixth edge (96) aligned with said second edge;
said third functional layer presenting an third inner surface (98) facing said fourth stopper surface of said second stopper and said second outer surface of said second functional layer and including an oppositely facing third outer surface (100) each extending from said fifth edge to said sixth edge;
said third outer surface and said third inner surface presenting a thickness (t₅) therebetween, said thickness being constant from said fifth edge to said sixth edge;
said thickness of said third functional layer being equal to said thickness of said first functional layer and said thickness of said second functional layer;
said third functional layer presenting a third full bead (102) axially aligned with said first full bead and said second full bead;
said third full bead and said first full bead having matching contours;
said third full bead disposed between said fifth edge and said sixth edge and closer to said fifth edge than said sixth edge;
a portion of said third inner surface and said third outer surface of said third functional layer extending in said first direction to present said third full bead;
said third inner surface of said third functional layer being concave along said third full bead and said third outer surface of said third functional layer being convex along said third full bead;
said third full bead extending circumferentially and continuously around said combustion chamber opening;
said third inner surface and said third outer surface of said third functional layer including a first planar region (57) between said fifth edge and said third full bead;
said third functional layer including a third half bead (104) disposed between said third full bead and said sixth edge and axially aligned with said first half bead and said second half bead;
said third half bead and said first half bead having matching contours;
said third half bead extending along said sixth edge;
said third inner surface and said third outer surface of said third functional layer including a second planar region (63) between said third full bead and said third half bead and a third planar region (65) between said third half bead and said sixth edge;
a portion of said third inner surface and said third outer surface of said third functional layer being disposed at an angle relative to said planar regions and extending in said first direction to present said third half bead.

3. The cylinder head gasket of claim 1, wherein each of said layers and said stoppers is formed of a steel material, said steel material including chromium and nickel.

4. The cylinder head gasket of claim 2 further comprising:
a third stopper (106) extending along said third outer surface of said third functional layer and circumferentially around said fifth edge and between said fifth edge and said third full bead for preventing over-compression of said third full bead;
said third stopper extending from a fifth stopper end (108) located at said fifth edge to a sixth stopper end (110) located between said fifth edge and said third full bead;
said third stopper presenting a fifth stopper surface (112) extending along said first planar region of said third outer surface of said third functional layer and a sixth stopper surface (114) facing opposite said fifth stopper surface;
said fifth stopper surface being attached to said third outer surface of said third functional layer;
said fifth stopper surface being attached to said third outer surface continuously from said fifth stopper end to said sixth stopper end;
said fifth stopper surface and said sixth stopper surface being planar from said fifth stopper end to said sixth stopper end;
said fifth stopper surface being welded, mechanically fixed, or clinched to said third outer surface of said third functional layer;
said fifth stopper surface and said sixth stopper surface presenting a thickness (t₆) therebetween;
said thickness of said third stopper being equal to said thickness of said first stopper;
a fourth functional layer (84) disposed adjacent said sixth stopper surface and said third outer surface of said third functional layer;
said fourth functional layer and said second functional layer having matching contours;
said fourth functional layer extending continuously between a seventh edge (116) aligned with said first edge and a eighth edge (118) aligned with said second edge of said first functional layer;
said fourth functional layer presenting an fourth inner surface facing (120) said sixth stopper surface and said third outer surface of said third functional layer and including an oppositely facing fourth outer surface (122) each extending from said seventh edge to said eighth edge;
said fourth outer surface and said fourth inner surface presenting a thickness (t₇) therebetween, said thickness being constant from said seventh edge to said eighth edge;
said thickness of said fourth functional layer being equal to said thickness of said other functional layers;
said fourth functional layer presenting a fourth full bead (124) axially aligned with said first full bead and said second full bead and said third full bead;
said fourth full bead and said second full bead having matching contours;
said fourth full bead disposed between said seventh edge and said eighth edge and closer to said seventh edge than said eighth edge;
a portion of said fourth inner surface and said fourth outer surface of said fourth functional layer extending in said second direction toward said third functional layer to present said fourth full bead;
said fourth inner surface of said fourth functional layer being convex along said fourth full bead and said fourth outer surface of said fourth functional layer being concave along said fourth full bead;
said fourth full bead extending circumferentially and continuously around said combustion chamber opening;
said fourth inner surface and said fourth outer surface of said fourth functional layer including a first planar region (67) between said seventh edge and said fourth full bead;
said fourth functional layer including a fourth half bead (126) disposed between said fourth full bead and said eighth edge and axially aligned with said first half bead and said second half bead and said third half bead;
said fourth half bead and said second half bead having matching contours;
said fourth half bead extending along said eighth edge;
said fourth inner surface and said fourth outer surface of said fourth functional layer including a second planar region (69) between said fourth full bead and said fourth half bead and a third planar region (71) between said fourth half bead and said eighth edge; and
a portion of said fourth inner surface and said fourth outer surface of said fourth functional layer being disposed at an angle (α) relative to said planar regions and extending in said second direction to present said fourth half bead.

## Patentansprüche

1. Zylinderkopfdichtung, umfassend:
eine erste funktionelle Schicht (24), die sich fortlaufend zwischen einer ersten Kante (38), die eine Verbrennungskammeröffnung (22) darstellt, und einer zweiten Kante (40) erstreckt, wobei die Verbrennungskammeröffnung eine zylindrische Form hat;
wobei die erste funktionelle Schicht eine erste Außenfläche (42) und eine entgegenzeigende erste Innenfläche (44) darstellt, wobei sich jede von der ersten Kante zur zweiten Kante erstreckt;
wobei die erste Außenfläche und die erste Innenfläche eine Dicke (t₁) dazwischen darstellen, wobei die Dicke von der ersten Kante zur zweiten Kante konstant ist;
wobei die erste funktionelle Schicht einen ersten vollen Wulst (26) darstellt, der zwischen der ersten Kante und der zweiten Kante und näher an der ersten Kante als der zweiten Kante angeordnet ist;
wobei sich die erste Innenfläche und die erste Außenfläche der ersten funktionellen Schicht in einer ersten Richtung (1) nach innen erstrecken, um den ersten vollen Wulst aufzuweisen;
wobei die erste Innenfläche der ersten funktionellen Schicht entlang des ersten vollen Wulsts konvex ist und die erste Außenfläche der ersten funktionellen Schicht entlang des ersten vollen Wulsts konkav ist;
wobei sich der erste volle Wulst umlaufend und fortlaufend um die erste Kante erstreckt, die Verbrennungskammeröffnung darstellend;
wobei die erste Innenfläche und die erste Außenfläche der ersten funktionellen Schicht einen ersten ebenen Bereich (54) zwischen der ersten Kante und dem ersten vollen Wulst enthalten;
wobei die erste funktionelle Schicht einen ersten halben Wulst (56) enthält, der zwischen dem ersten vollen Wulst und der zweiten Kante angeordnet ist;
wobei sich der erste halbe Wulst entlang der zweiten Kante erstreckt;
wobei die erste Innenfläche und die erste Außenfläche der ersten funktionellen Schicht einen zweiten ebenen Bereich (58) zwischen dem ersten vollen Wulst und dem ersten halben Wulst enthalten;
wobei die erste Innenfläche und die erste Außenfläche der ersten funktionellen Schicht einen dritten ebenen Bereich (60) zwischen dem ersten halben Wulst und der zweiten Kante enthalten;
wobei ein Abschnitt der ersten Innenfläche und der ersten Außenfläche der ersten funktionellen Schicht bei einem Winkel relativ zu den ebenen Bereichen angeordnet ist und sich in der ersten Richtung erstreckt, um den ersten halben Wulst darzustellen;
eine zweite funktionelle Schicht (28), die sich fortlaufend zwischen einer dritten Kante (64), die mit der ersten Kante ausgerichtet ist und die Verbrennungskammeröffnung darstellt, und einer vierten Kante (66), die mit der zweiten Kante ausgerichtet ist, erstreckt;
wobei die zweite funktionelle Schicht eine zweite Außenfläche (68) und eine entgegenzeigende zweite Innenfläche (70) darstellt, wobei jede sich von der dritten Kante zur vierten Kante erstreckt;
wobei die zweite Außenfläche und die zweite Innenfläche eine Dicke (t₂) dazwischen darstellen, wobei die Dicke von der dritten Kante zur vierten Kante konstant ist;
wobei die Dicke der zweiten funktionellen Schicht gleich der Dicke der ersten funktionellen Schicht ist;
wobei die zweite funktionelle Schicht einen zweiten vollen Wulst (30) darstellt, der zwischen der dritten Kante und der vierten Kante und näher zur dritten Kante als der vierten Kante angeordnet ist;
wobei sich die zweite Innenfläche und die zweite Außenfläche der zweiten funktionellen Schicht in einer zweiten Richtung entgegen der ersten Richtung und hin zur ersten funktionellen Schicht erstrecken, um den zweiten vollen Wulst darzustellen;
wobei der zweite volle Wulst der zweiten funktionellen Schicht axial mit dem ersten vollen Wulst der ersten funktionellen Schicht ausgerichtet ist;
wobei der erste volle Wust und der zweite volle Wulst Umrisse haben, die Spiegelbilder voneinander sind;
wobei die zweite Innenfläche der zweiten funktionellen Schicht entlang des zweiten vollen Wulst konvex ist und die zweite Außenfläche der zweiten funktionellen Schicht entlang des zweiten vollen Wulst konkav ist;
wobei sich der zweite volle Wulst der zweiten funktionellen Schicht umlaufend und fortlaufend um die dritte Kante erstreckt, die die Verbrennungskammeröffnung darstellt;
wobei die zweite Innenfläche und die zweite Außenfläche der zweiten funktionellen Schicht einen ersten ebenen Bereich zwischen der dritten Kante und dem zweiten vollen Wulst enthalten;
wobei die zweite funktionelle Schicht einen zweiten halben Wulst (72) enthält, der zwischen dem zweiten vollen Wulst und der vierten Kante angeordnet und axial mit dem ersten halben Wulst ausgerichtet ist;
wobei der erste halbe Wulst und der zweite halbe Wulst Umrisse haben, die Spiegelbilder voneinander sind;
wobei sich der erste halbe Wulst entlang der vierten Kante erstreckt;
wobei die zweite Innenfläche und die zweite Außenfläche der zweiten funktionellen Schicht einen zweiten ebenen Bereich (59) zwischen dem zweiten vollen Wust und dem zweiten halben Wulst enthalten;
wobei die zweite Innenfläche und die zweite Außenfläche der zweiten funktionellen Schicht einen dritten ebenen Bereich (61) zwischen dem zweiten halben Wulst und der vierten Kante enthalten;
wobei ein Abschnitt der zweiten Innenfläche und die zweite Außenfläche der zweiten funktionellen Schicht bei einem Winkel relativ zu den ebenen Bereichen angeordnet sind und sich in der zweiten Richtung erstrecken, um den zweiten halben Wulst darzustellen;
einen ersten Stopper (32), der sich entlang der ersten Innenfläche der ersten funktionellen Schicht, um die erste Kante umlaufend und zwischen der ersten Kante und dem ersten vollen Wulst, erstreckt, um eine Überkompression des ersten vollen Wulsts zu verhindern;
wobei sich der erste Stopper von einem ersten Stopperende (74), das bei der ersten Kante gelegen ist, zu einem zweiten Stopperende (76), das zwischen der ersten Kante und dem ersten vollen Wulst gelegen ist, erstreckt;
wobei der erste Stopper eine erste Stopperfläche (78), die sich entlang des ersten ebenen Bereichs der ersten Innenfläche der ersten funktionellen Schicht erstreckt, und eine zweite Stopperfläche (80), die entgegengesetzt zur ersten Stopperfläche und hin zur zweiten funktionellen Schicht zeigt, darstellt;
wobei die erste Stopperfläche und die zweite Stopperfläche vom ersten Stopperende zum zweiten Stopperende eben sind;
wobei die erste Stopperfläche an der ersten Innenfläche der ersten funktionellen Schicht befestigt ist;
wobei die erste Stopperfläche vom ersten Stopperende zum zweiten Stopperende fortlaufend an der ersten Innenfläche befestigt ist;
wobei die erste Stopperfläche an die erste Innenfläche der ersten funktionellen Schicht geschweißt, mechanisch fixiert oder geklemmt ist;
wobei die erste Stopperfläche und die zweite Stopperfläche eine Dicke (t₃) dazwischen darstellen;
wobei die Dicke des ersten Stoppers kleiner als die Dicke der funktionellen Schichten ist;
einen zweiten Stopper (34), der sich entlang der zweiten Außenfläche der zweiten funktionellen Schicht und entlang des zweiten vollen Wulsts der zweiten funktionellen Schicht zwischen der dritten Kante und der vierten Kante erstreckt, um eine Last auf dem zweiten vollen Wulst zu erhöhen und eine regelmäßige Verteilung der Last zu unterstützen;
wobei sich der zweite Stopper von einem dritten Stopperende (86), das mit der dritten Kante ausgerichtet ist, zu einem vierten Stopperende (88), das zwischen der dritten Kante und der vierten Kante und näher zur dritten Kante als der vierten Kante gelegen ist, erstreckt;
wobei der zweite Stopper eine dritte Stopperfläche (90), die sich entlang der zweiten Außenfläche der zweiten funktionellen Schicht erstreckt, und eine vierte Stopperfläche (92), die entgegen der ersten Stopperfläche zeigt, darstellt;
wobei die dritte Stopperfläche und die vierte Stopperfläche vom dritten Stopperende zum vierten Stopperende eben sind;
wobei die dritte Stopperfläche entlang des ersten ebenen Bereichs und entlang des zweiten ebenen Bereichs der zweiten funktionellen Schicht an der zweiten Außenfläche befestigt ist;
wobei die dritte Stopperfläche von der zweiten Außenfläche der zweiten funktionellen Schicht entlang des zweiten vollen Wulsts durch einen Luftspalt beabstandet ist, wenn die Dichtung nicht komprimiert ist;
wobei die dritte Stopperfläche entlang des ersten ebenen Bereichs und entlang des zweiten ebenen Bereichs der zweiten funktionellen Schicht an die zweite Außenfläche geschweißt, mechanisch fixiert oder geklemmt ist;
wobei die dritte Stopperfläche entlang des zweiten vollen Wulsts der zweiten funktionellen Schicht nicht an der zweiten Außenfläche befestigt ist;
wobei die dritte Stopperfläche und die vierte Stopperfläche eine Dicke (t₄) dazwischen darstellen;
wobei die Dicke des zweiten Stoppers nicht kleiner als die Dicke des ersten Stoppers und kleinerer als die Dicke der funktionellen Schichten ist.

2. Zylinderkopfdichtung nach Anspruch 1, ferner umfassend:
eine dritte funktionelle Schicht (82), die angrenzend an die vierte Stopperfläche und die zweite Außenfläche der zweiten funktionellen Schicht angeordnet ist;
wobei die dritte funktionelle Schicht und die erste funktionelle Schicht übereinstimmende Umrisse haben;
wobei sich die dritte funktionelle Schicht fortlaufend zwischen einer fünften Kante (94), die mit der ersten Kante ausgerichtet ist, und einer sechsten Kante (96), die mit der zweiten Kante ausgerichtet ist, erstreckt;
wobei die dritte funktionelle Schicht eine dritte Innenfläche (98), die zur vierten Stopperfläche des zweiten Stoppers und der zweiten Außenfläche der zweiten funktionellen Schicht zeigt, darstellt und eine entgegenzeigende dritte Außenfläche (100) enthält, wobei jede sich von der fünften Kante zur sechsten Kante erstreckt;
wobei die dritte Außenfläche und die dritte Innenfläche eine Dicke (t₅) dazwischen darstellen, wobei die Dicke von der fünften Kante zur sechsten Kante konstant ist;
wobei die Dicke der dritten funktionellen Schicht gleich der Dicke der ersten funktionellen Schicht und der Dicke der zweiten funktionellen Schicht ist;
wobei die dritte funktionelle Schicht einen dritten vollen Wulst (102) darstellt, der axial mit dem ersten vollen Wulst und dem zweiten vollen Wulst ausgerichtet ist;
wobei der dritte volle Wulst und der erste volle Wulst übereinstimmende Umrisse haben;
wobei der dritte volle Wulst zwischen der fünften Kante und der sechsten Kante und näher an der fünften Kante als der sechsten Kante angeordnet ist;
wobei sich ein Abschnitt der dritten Innenfläche und der dritten Außenfläche der dritten funktionellen Schicht in der ersten Richtung erstreckt, um den dritten vollen Wulst darzustellen;
wobei die dritte Innenfläche der dritten funktionellen Schicht entlang des dritten vollen Wulsts konkav ist und die dritte Außenfläche der dritten funktionellen Schicht entlang des dritten vollen Wulsts konvex ist;
wobei sich der dritte volle Wulst umlaufend und fortlaufend um die Verbrennungskammeröffnung erstreckt;
wobei die dritte Innenfläche und die dritte Außenfläche der dritten funktionellen Schicht einen ersten ebenen Bereich (57) zwischen der fünften Kante und dem dritten vollen Wulst enthalten;
wobei die dritte funktionelle Schicht einen dritten halben Wulst (104) enthält, der zwischen dem dritten vollen Wulst und der sechsten Kante angeordnet und axial mit dem ersten halben Wulst und dem zweiten halben Wulst ausgerichtet ist;
wobei der dritte halbe Wulst und der erste halbe Wulst übereinstimmende Umrisse haben;
wobei sich der dritte halbe Wulst entlang der sechsten Kante erstreckt;
wobei die dritte Innenfläche und dritte Außenfläche der dritten funktionellen Schicht einen zweiten ebenen Bereich (63) zwischen dem dritten vollen Wulst und dem dritten halben Wulst und einen dritten ebenen Bereich (65) zwischen dem dritten halben Wulst und der sechsten Kante enthalten;
wobei ein Abschnitt der dritten Innenfläche und der dritten Außenfläche der dritten funktionellen Schicht bei einem Winkel relativ zu den ebenen Bereichen angeordnet sind und sich in der ersten Richtung erstrecken, um den dritten halben Wulst darzustellen.

3. Zylinderkopfdichtung nach Anspruch 1, wobei jede der Schichten und der Stopper aus einem Stahlmaterial gebildet ist, wobei das Stahlmaterial Chrom und Nickel enthält.

4. Zylinderkopfdichtung nach Anspruch 2, ferner umfassend:
einen dritten Stopper (106), der sich entlang der dritten Außenfläche der dritten funktionellen Schicht und um die fünfte Kante umlaufend und zwischen der fünften Kante und dem dritten vollen Wulst erstreckt, um eine Überkompression des dritten vollen Wulsts zu verhindern;
wobei sich der dritte Stopper von einem fünften Stopperende (108), das bei der fünften Kante gelegen ist, zu einem sechsten Stopperende (110), das zwischen der fünften Kante und dem dritten vollen Wulst gelegen ist, erstreckt;
wobei der dritte Stopper eine fünfte Stopperfläche (112), die sich entlang des ersten ebenen Bereichs der dritten Außenfläche der dritten funktionellen Schicht erstreckt, und eine sechste Stopperfläche (114), die entgegen der fünften Stopperfläche zeigt, darstellt;
wobei die fünfte Stopperfläche an der dritten Außenfläche der dritten funktionellen Schicht befestigt ist;
wobei die fünfte Stopperfläche vom fünften Stopper zum sechsten Stopper fortlaufend an der dritten Außenfläche befestigt ist;
wobei die fünfte Stopperfläche und die sechste Stopperfläche vom fünften Stopperende zum sechsten Stopperende eben sind;
wobei die fünfte Stopperfläche an die dritte Außenfläche der dritten funktionellen Schicht geschweißt, mechanisch fixiert oder geklemmt ist;
wobei die fünfte Stopperfläche und die sechste Stopperfläche eine Dicke (t₆) dazwischen darstellen;
wobei die Dicke des dritten Stoppers gleich der Dicke des ersten Stoppers ist;
eine vierte funktionelle Schicht (84), die angrenzend an die sechste Stopperfläche und die dritte Außenfläche der dritten funktionellen Schicht angeordnet ist;
wobei die vierte funktionelle Schicht und die zweite funktionelle Schicht übereinstimmende Umrisse haben;
wobei sich die vierte funktionelle Schicht fortlaufend zwischen einer siebenten Kante (116), die mit der ersten Kante ausgerichtet ist, und einer achten Kante (118), die mit der zweiten Kante der ersten funktionellen Schicht ausgerichtet ist, erstreckt;
wobei die vierte funktionelle Schicht eine vierte Innenfläche (120), die zur sechsten Stopperfläche und der dritten Außenfläche der dritten funktionellen Schicht zeigt, darstellt und eine entgegenzeigende vierte Außenfläche (122) enthält, wobei jede sich von der siebenten Kante zur achten Kante erstreckt;
wobei die vierte Außenfläche und die vierte Innenfläche eine Dicke (t₇) dazwischen darstellen, wobei die Dicke von der siebenten Kante zur achten Kante konstant ist;
wobei die Dicke der vierten funktionellen Schicht gleich der Dicke der anderen funktionellen Schichten ist;
wobei die vierte funktionelle Schicht einen vierten vollen Wulst (124) darstellt, der axial mit dem ersten vollen Wulst und dem zweiten vollen Wulst und dem dritten vollen Wulst ausgerichtet ist;
wobei der vierte volle Wulst und der zweite volle Wulst übereinstimmende Umrisse haben;
wobei der vierte volle Wulst zwischen der siebten Kante und der achten Kante und näher an der siebten Kante als der achten Kante angeordnet ist;
wobei sich ein Abschnitt der vierten Innenfläche und die vierte Außenfläche der vierten funktionellen Schicht in der zweiten Richtung hin zur dritten funktionellen Schicht erstrecken, um den vierten vollen Wulst darzustellen;
wobei die vierte Innenfläche der vierten funktionellen Schicht entlang des vierten vollen Wulst konvex ist und die vierte Außenfläche der vierten funktionellen Schicht entlang des vierten vollen Wulst konkav ist;
wobei sich der vierte volle Wulst umlaufend und fortlaufend um die Verbrennungskammeröffnung erstreckt;
wobei die vierte Innenfläche und die vierte Außenfläche der vierten funktionellen Schicht einen ersten ebenen Bereich (67) zwischen der siebenten Kante und dem vierten vollen Wulst enthalten;
wobei die vierte funktionelle Schicht einen vierten halben Wulst (126) enthält, der zwischen dem vierten vollen Wust und der achten Kante angeordnet ist und axial mit dem ersten halben Wulst und dem zweiten halben Wulst und dem dritten halben Wulst ausgerichtet ist;
wobei der vierte halbe Wulst und der zweite halbe Wulst übereinstimmende Umrisse haben;
wobei sich der vierte halbe Wulst entlang der achten Kante erstreckt;
wobei die vierte Innenfläche und die vierte Außenfläche der vierten funktionellen Schicht einen zweiten ebenen Bereich (69) zwischen dem vierten vollen Wulst und dem vierten halben Wulst enthalten und einen dritten ebenen Bereich (71) zwischen dem vierten halben Wulst und der achten Kante; und
wobei ein Abschnitt der vierten Innenfläche und der vierten Außenfläche der vierten funktionellen Schicht bei einem Winkel (α) relativ zu den ebenen Bereichen angeordnet sind und sich in der zweiten Richtung erstrecken, um den vierten halben Wulst darzustellen.

## Revendications

1. Joint de culasse, comprenant :
une première couche fonctionnelle (24) s'étendant en continu entre un premier bord (38) présentant une ouverture de chambre de combustion (22) et un second bord (40), ladite ouverture de chambre de combustion ayant une forme cylindrique ;
ladite première couche fonctionnelle présentant une première surface extérieure (42) et une première surface intérieure opposée lui faisant face (44) s'étendant dans chacune dudit premier bord audit second bord ;
ladite première surface extérieure et ladite première surface intérieure présentant une épaisseur (t₁) entre elles, ladite épaisseur étant constante dudit premier bord au dit second bord ;
ladite première couche fonctionnelle présentant une première moulure pleine (26) disposée entre ledit premier bord et ledit second bord et plus proche dudit premier bord que dudit second bord ;
ladite première surface intérieure et ladite première surface extérieure de ladite première couche fonctionnelle s'étendant vers l'intérieur dans une première direction (1) afin de présenter ladite première moulure pleine ;
ladite première surface intérieure de ladite première couche fonctionnelle étant convexe le long de ladite première moulure pleine et ladite première surface extérieure de ladite première couche fonctionnelle étant concave le long de ladite première moulure pleine ;
ladite première moulure pleine s'étendant de manière circonférentielle et en continu autour dudit premier bord présentant ladite ouverture de chambre de combustion ;
ladite première surface intérieure de ladite première surface extérieure de ladite première couche fonctionnelle incluant une première région planaire (54) entre ledit premier bord et ladite première moulure pleine ;
ladite première couche fonctionnelle incluant une première demie moulure (56) disposée entre ladite première moulure pleine et ledit second bord ;
ladite première demie moulure s'étendant le long dudit second bord ;
ladite première surface intérieure de ladite première surface extérieure de ladite première couche fonctionnelle incluant une seconde région planaire (58) entre ladite première moulure pleine et ladite première demie moulure ;
ladite première surface intérieure de ladite première surface extérieure de ladite première couche fonctionnelle incluant une troisième région planaire (60) entre ladite première demie moulure et ledit second bord ;
une portion de ladite première surface intérieure et ladite première surface extérieure de ladite première couche fonctionnelle étant disposée à un angle par rapport auxdites régions planaires et s'étendant dans ladite première direction pour présenter ladite première demie moulure ;
une seconde couche fonctionnelle (28) s'étendant en continu entre un troisième bord (64) aligné avec ledit premier bord et présentant ladite ouverture de chambre de combustion et un quatrième bord (66) aligné avec ledit second bord ;
ladite seconde couche fonctionnelle présentant une seconde surface extérieure (68) et une seconde surface inférieure opposée lui faisant face (70) s'étendant chacune dudit troisième bord audit quatrième bord ;
ladite seconde surface extérieure et ladite seconde surface intérieure présentant une épaisseur (t₂) entre elles, ladite épaisseur étant constante dudit troisième bord audit quatrième bord ;
ladite épaisseur de ladite seconde couche fonctionnelle étant égale à ladite épaisseur de ladite première couche fonctionnelle ;
ladite seconde couche fonctionnelle présentant une seconde moulure pleine (30) disposée entre ledit troisième bord et ledit quatrième bord et plus proche dudit troisième bord que dudit quatrième bord ;
ladite seconde surface intérieure et ladite seconde surface extérieure de ladite seconde couche fonctionnelle s'étendant vers l'intérieur dans une seconde direction opposée à ladite première direction et dans la direction de ladite première couche fonctionnelle pour présenter ladite seconde moulure pleine ;
ladite seconde moulure pleine de ladite seconde couche fonctionnelle étant alignée axialement avec ladite première moulure pleine de ladite première couche fonctionnelle ;
ladite première moulure pleine et ladite seconde moulure pleine ayant des contours étant des images symétriques l'un de l'autre ;
ladite seconde surface intérieure de ladite seconde couche fonctionnelle étant convexe le long de ladite seconde moulure pleine et ladite seconde surface extérieure de ladite seconde couche fonctionnelle étant concave le long de ladite seconde moulure pleine ;
ladite seconde moulure pleine de ladite seconde couche fonctionnelle s'étendant de manière circonférentielle et en continu autour du troisième bord présentant ladite ouverture de chambre de combustion ;
ladite seconde surface intérieure et ladite seconde surface extérieure de ladite couche fonctionnelle incluant une première région planaire entre ledit troisième bord et ladite seconde moulure pleine ;
ladite seconde couche fonctionnelle incluant une seconde demie moulure (72) disposée entre ladite seconde moulure pleine et ledit quatrième port et alignée axialement avec ladite première demie moulure ;
ladite première demie moulure et ladite seconde demie moulure ayant des contours étant des images symétriques l'un de l'autre ;
ladite seconde demie moulure s'étendant le long dudit quatrième bord ;
ladite seconde surface intérieure et ladite seconde surface extérieure de ladite seconde couche fonctionnelle incluant une seconde région planaire (59) entre ladite seconde moulure complète et ladite seconde demie moulure ;
ladite seconde surface intérieure et ladite seconde surface extérieure de ladite seconde couche fonctionnelle incluant une troisième région planaire (61) entre ladite demie moulure et ledit quatrième bord ;
une portion de ladite seconde surface intérieure et ladite seconde surface intérieure de ladite seconde couche fonctionnelle étant disposée à un angle par rapport auxdites régions planaires et s'étendant dans ladite seconde direction pour présenter ladite seconde demie moulure ;
une première butée (32) s'étendant le long de ladite première surface intérieure de ladite première couche fonctionnelle de manière circonférentielle autour dudit premier bord et entre ledit premier bord et ladite première moulure pleine pour empêcher une compression excessive de ladite première moulure pleine ;
ladite première butée s'étendant d'une première extrémité de butée (74) située au niveau dudit premier bord vers une seconde extrémité de butée (76) située entre ledit premier bord et ladite première moulure pleine ;
ladite première butée présentant une première surface de butée (78) s'étendant le long de ladite première région planaire de ladite première surface intérieure de ladite première couche fonctionnelle et une seconde surface de butée (80) opposéé et faisant face à ladite première surface de butée et dirigée vers ladite seconde couche fonctionnelle ;
ladite première surface de butée et ladite seconde surface de butée étant planaires de ladite première extrémité de butée à ladite seconde extrémité de butée ;
ladite première surface de butée étant fixée à ladite première surface intérieure de ladite première couche fonctionnelle ;
ladite première surface de butée étant fixée à ladite première surface intérieure en continu de ladite première extrémité de butée à ladite seconde extrémité de butée ;
ladite première surface de butée étant soudée, fixée mécaniquement ou rivetée à ladite première surface intérieure de ladite première couche fonctionnelle ;
ladite première surface de butée et ladite seconde surface de butée présentant une épaisseur (t₃) entre elles ;
ladite épaisseur de ladite première butée étant inférieure à ladite épaisseur desdites couches fonctionnelles ;
une seconde butée (34) s'étendant le long de ladite seconde surface extérieure de ladite couche fonctionnelle et le long de ladite seconde moulure pleine de ladite seconde couche fonctionnelle entre ledit troisième bord et ledit quatrième bord pour augmenter une charge sur ladite seconde moulure pleine et promouvoir une répartition uniforme de la charge ;
ladite seconde butée s'étendant d'une troisième extrémité de butée (86) alignée avec ledit troisième bord à une quatrième extrémité de butée (88) situé entre ledit troisième bord et ledit quatrième bord et plus proche dudit troisième bord que dudit quatrième bord ;
ladite seconde butée présentant une troisième surface de butée (90) s'étendant le long de ladite seconde surface extérieure de ladite seconde couche fonctionnelle et une quatrième surface de butée (92) opposés faisant face à ladite première surface de butée ;
ladite troisième surface de butée et ladite quatrième surface de butée étant planaires de ladite troisième extrémité de butée à ladite quatrième extrémité de butée ;
ladite troisième surface de butée étant fixée à ladite seconde surface extérieure le long de ladite première région planaire et le long de ladite seconde région planaire de ladite seconde couche fonctionnelle ;
ladite troisième surface de butée étant espacée de ladite seconde surface extérieure de ladite seconde couche fonctionnelle le long de ladite seconde moulure pleine par un entrefer lorsque ledit joint d'étanchéité n'est pas compressé ;
ledit troisième surface de butée étant soudée, fixée mécaniquement ou rivetée à ladite seconde surface extérieure le long de ladite première région planaire et le long de ladite seconde région planaire de ladite seconde couche fonctionnelle ;
ladite troisième surface de butée n'étant pas fixée à ladite seconde surface extérieure le long de ladite seconde moulure pleine de ladite seconde couche fonctionnelle ;
ladite troisième surface de butée et ladite quatrième surface de butée présentant une épaisseur (t₄) entre elles ;
ladite épaisseur de ladite seconde butée n'étant pas inférieure à ladite épaisseur de ladite première butée et inférieure à ladite épaisseur desdites couches fonctionnelles.

2. Joint de culasse selon la revendication 1, comprenant en outre :
une troisième couche fonctionnelle (82) disposée à proximité de ladite quatrième surface de butée et ladite seconde surface extérieure de ladite seconde couche fonctionnelle ;
ladite troisième couche fonctionnelle et ladite première couche fonctionnelle ayant des contours assortis ;
ladite troisième couche fonctionnelle s'étendant en continu entre un cinquième bord (94) aligné avec ledit premier bord et un sixième bord (96) aligné avec ledit second bord ;
ladite troisième couche fonctionnelle présentant une troisième surface intérieure (98) faisant face à ladite quatrième surface de butée de ladite seconde butée et ladite seconde surface extérieure de ladite seconde couche fonctionnelle et incluant une troisième surface extérieure opposée lui faisant face (100) s'étendant chacune dudit cinquième bord audit sixième bord ;
ladite troisième surface extérieure et ladite troisième surface intérieure présentant une épaisseur (t₅) entre elles, ladite épaisseur étant constante dudit cinquième bord audit sixième bord ;
ladite épaisseur de ladite troisième couche fonctionnelle étant égale à ladite épaisseur de ladite première couche fonctionnelle et ladite épaisseur de ladite seconde couche fonctionnelle ;
ladite troisième couche fonctionnelle présentant une troisième moulure pleine (102) alignée axialement avec ladite première moulure pleine et ladite seconde moulure pleine ;
ladite troisième moulure pleine et ladite première moulure pleine ayant des contours assortis ;
ladite troisième moulure pleine étant disposée entre ledit cinquième bord et ledit sixième bord et plus proche dudit cinquième bord que dudit sixième bord ;
une portion de ladite troisième surface intérieure et ladite troisième surface extérieure de ladite troisième couche fonctionnelle s'étendant dans ladite première direction pour présenter ladite troisième moulure pleine ;
ladite troisième surface intérieure de ladite troisième couche fonctionnelle étant concave le long de ladite troisième moulure pleine et ladite troisième surface extérieure de ladite troisième couche fonctionnelle étant convexe le long de ladite troisième moulure pleine ;
ladite troisième moulure pleine s'étendant de manière circonférentielle en continu autour de ladite ouverture de chambre de combustion ;
ladite troisième surface intérieure et ladite troisième surface extérieure de ladite troisième couche fonctionnelle incluant une première région planaire (57) entre ledit cinquième bord et ladite troisième moulure pleine ;
ladite troisième couche fonctionnelle incluant une troisième demie moulure (104) disposée entre ladite troisième moulure pleine et ledit sixième bord et aligné axialement avec ladite première demie moulure et ladite seconde demie moulure ;
ladite troisième demie moulure et ladite première demie moulure ayant des contours assortis ;
ladite troisième demie moulure s'étendant le long dudit sixième bord ;
ladite troisième surface intérieure et ladite troisième surface extérieure de ladite troisième couche fonctionnelle incluant une seconde région planaire (63) entre ladite troisième moulure pleine et ladite troisième demie moulure et une troisième région planaire (65) entre ladite troisième demie moulure et ledit sixième bord ;
une portion de ladite troisième surface intérieure et ladite troisième surface extérieure de ladite troisième couche fonctionnelle étant disposée à un angle par rapport auxdites régions planaires et s'étendant dans ladite première direction pour présenter ladite troisième demie moulure.

3. Joint de culasse selon la revendication 1, dans lequel chacune desdites couches et desdites butées est formée d'un matériau d'acier, ledit matériau d'acier incluant du chrome et du nickel.

4. Joint de culasse selon la revendication 2 comprenant en outre :
une troisième butée (106) s'étendant le long de ladite troisième surface extérieure de ladite troisième couche fonctionnelle et de manière circonférentielle autour dudit cinquième bord et entre ledit cinquième bord et ladite troisième moulure pleine pour empêcher une compression excessive de ladite troisième moulure pleine ;
ladite troisième butée s'étendant d'une cinquième extrémité de butée (108) située au niveau dudit cinquième bord à une sixième extrémité de butée (110) situé entre ledit cinquième bord et ladite troisième moulure pleine ;
ladite troisième butée présentant une cinquième surface de butée (112) s'étendant le long de ladite première région planaire de ladite surface extérieure de ladite troisième couche fonctionnelle et une sixième surface de butée (114) opposée faisant face à ladite cinquième surface de butée ;
ladite surface de butée étant fixée à ladite troisième surface extérieure de ladite troisième couche fonctionnelle ;
ladite cinquième surface de butée étant fixée à ladite troisième surface extérieure en continu de ladite cinquième extrémité de butée à ladite sixième extrémité de butée ;
ladite cinquième surface de butée et ladite sixième surface de butée étant planaires de ladite cinquième extrémité de butée à ladite sixième extrémité de butée ;
ladite cinquième surface de butée étant soudée, fixée mécaniquement ou rivetée à ladite troisième surface extérieure de ladite troisième couche fonctionnelle ;
ladite cinquième surface de butée et ladite sixième surface de butée présentant une épaisseur (t6) entre elles ;
ladite épaisseur de ladite troisième butée étant égale à ladite épaisseur de ladite première butée ;
une quatrième couche fonctionnelle (84) disposée à proximité de ladite sixième surface de butée et ladite troisième surface extérieure de ladite troisième couche fonctionnelle ;
ladite quatrième couche fonctionnelle et ladite seconde couche fonctionnelle ayant des contours assortis ;
ladite quatrième couche fonctionnelle s'étendant en continu entre un septième bord (116) aligné avec ledit premier bord et un huitième bord (118) alignée avec ledit second bord de ladite première couche fonctionnelle ;
ladite quatrième couche fonctionnelle présentant une quatrième surface intérieure faisant face (120) à ladite sixième surface de butée et ladite troisième surface extérieure de ladite troisième couche fonctionnelle et incluant une quatrième surface extérieure opposée lui faisant face (122) s'étendant chacune dudit septième bord audit huitième bord ;
ladite quatrième surface extérieure et ladite quatrième surface et ladite quatrième surface intérieure présentant une épaisseur (t₇) entre elles, ladite épaisseur étant constante dudit septième bord audit huitième bord ;
ladite épaisseur de ladite quatrième couche fonctionnelle étant égale à ladite épaisseur desdites autres couches fonctionnelles ;
ladite quatrième couche fonctionnelle présentant une quatrième moulure pleine (124) alignée axialement avec ladite première moulure pleine et ladite seconde moulure pleine et ladite troisième moulure pleine ;
ladite quatrième moulure pleine et ladite seconde moulure pleine ayant des contours assortis ;
ladite quatrième moulure pleine étant disposée entre ledit septième bord et ledit huitième bord et plus proche dudit septième bord que dudit huitième bord ;
une portion de ladite quatrième surface intérieure et ladite quatrième surface extérieure de ladite quatrième couche fonctionnelle s'étendant dans ladite seconde direction vers ladite troisième couche fonctionnelle pour présenter ladite quatrième moulure pleine ;
ladite quatrième surface intérieure de ladite quatrième couche fonctionnelle étant convexe le long de ladite quatrième moulure pleine et ladite quatrième surface extérieure de ladite quatrième couche fonctionnelle étant concave le long de ladite quatrième moulure pleine ;
ladite quatrième moulure pleine s'étendant de manière circonférentielle en continu autour de ladite ouverture de chambre de combustion ;
ladite quatrième surface intérieure et ladite quatrième surface extérieure de ladite quatrième couche fonctionnelle incluant une première région planaire (67) entre ledit septième bord et ladite quatrième moulure pleine ;
ladite quatrième couche fonctionnelle incluant une quatrième moulure pleine (126) disposée entre ladite quatrième moulure pleine et ledit huitième bord et aligné axialement avec ladite première demie moulure et ladite seconde demie moulure et ladite troisième demie moulure ;
ladite quatrième demie moulure et ladite seconde demie moulure ayant des contours assortis ;
ladite quatrième demie moulure s'étendant le long dudit huitième bord ;
ladite quatrième surface intérieure et ladite quatrième surface extérieure de ladite quatrième couche fonctionnelle incluant une seconde région planaire (69) entre ladite quatrième moulure pleine et ladite quatrième demie moulure et une troisième région planaire (71) entre ladite quatrième demie moulure et ledit huitième bord ; et
une portion de ladite quatrième surface intérieure et ladite quatrième surface extérieure de ladite quatrième couche fonctionnelle étant disposée à un angle (α) par rapport auxdites régions planaires et s'étendant dans ladite seconde direction pour présenter ladite quatrième demie moulure.
